# EUROPÄISCHE PATENTSCHRIFT

(11) **EP 3 884 153 B1**
(45) Veröffentlichungstag und Bekanntmachung des Hinweises auf die Patenterteilung: **12.02.2025**
(21) Anmeldenummer: 19809428.6
(22) Anmeldetag: 22.11.2019
(51) Int. Cl.: F03D 7/04

(54) **REGLERSTRUKTUR UND REGELVERFAHREN FÜR EINE WINDENERGIEANLAGE**
CONTROLLER STRUCTURE AND CONTROL METHOD FOR A WIND TURBINE
STRUCTURE DE RÉGULATION ET PROCÉDÉ DE RÉGULATION POUR UNE ÉOLIENNE

(30) Priorität: 23.11.2018 DE 102018129622
(43) Veröffentlichungstag der Anmeldung: 29.09.2021
(73) Patentinhaber: Wobben Properties GmbH, 26607 Aurich (DE)
(72) Erfinder: VON ASWEGE, Enno, 26629 Großefehn (DE)
(74) Vertreter: Eisenführ Speiser
(86) Internationale Anmeldenummer: PCT/EP2019/082244
(87) Internationale Veröffentlichungsnummer: WO 2020/104664

(56) Entgegenhaltungen:
- EP-A1- 2 365 215
- EP-A1- 3 156 646
- WO-A1-2014/111614
- US-A1- 2010 142 237
- US-A1- 2014 246 855
- US-A1- 2015 292 483

## Beschreibung

Die vorliegende Erfindung betrifft eine Reglerstruktur für eine Windenergieanlage mit einem aerodynamischen Rotor mit wenigstens einem Rotorblatt, ein zugehöriges Regelverfahren sowie eine Windenergieanlage und einen Windpark.

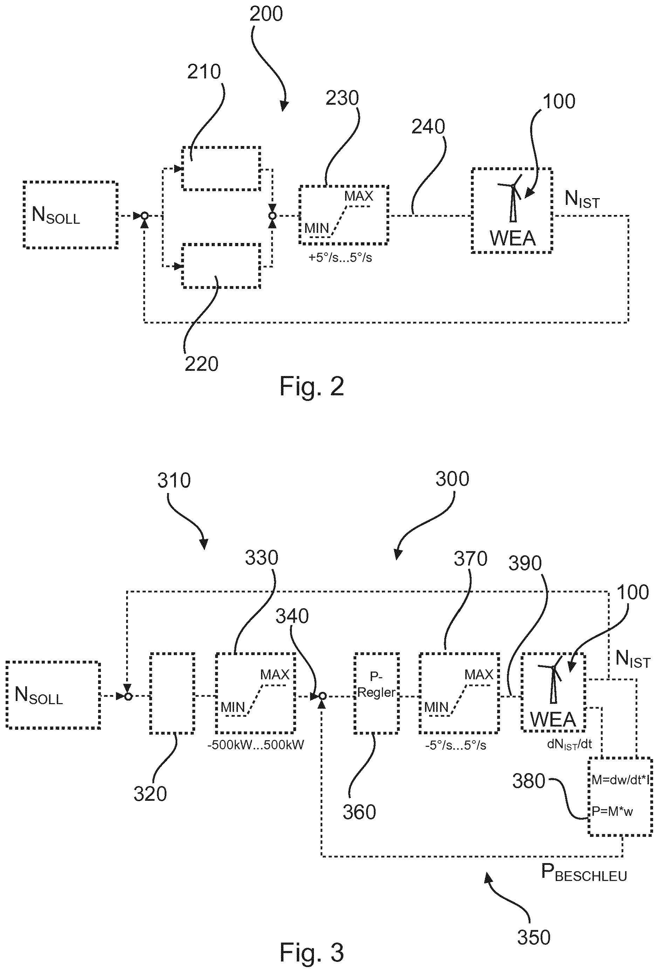

Reglerstrukturen zum Betrieb von Windenergieanlagen sind bekannt. Am weitesten verbreitet sind sogenannte pitchgesteuerte Windenergieanlagen, bei denen die Rotorblätter des Rotors der Windenergieanlage um ihre Längsachse, die sogenannte Pitchachse, verstellbar sind. Durch die Veränderung des Pitchwinkels wird eine aerodynamische Leistung der Rotorblätter verändert, wodurch eine Beschränkung der Leistung auf Nennleistung bei Erreichen des Nennwindes ermöglicht wird. Hierzu ist es bekannt, sogenannte Drehzahlregler, wie sie schematisch in Fig. 2 gezeigt sind, vorzusehen, um eine Solldrehzahl *N_{Soll}* in etwa einzuhalten. Der Drehzahlregler 200 ist dazu ausgebildet, die Solldrehzahl *N_{Soll}* als Führungsgröße nach Möglichkeit einzuregeln, wobei eine von der Windenergieanlage 100 gemessene Ist-Drehzahl *N_{Ist}* zurückgeführt wird und die Abweichung mittels eines P-Reglers 210 und eines D-Reglers 220 in eine einzustellende Pitchrate umgesetzt wird. Die Pitchrate wird durch einen Pitchratenbegrenzer 230 begrenzt auf eine Sollpitchrate 240 eingestellt, die dann zum Betrieb der Windenergieanlage 100 verwendet wird.

Die Qualität der Regelung der Drehzahl beeinflusst unmittelbar die Schnittlasten wichtiger Komponenten der Windenergieanlage, wie beispielsweise des Turms und der Rotorblätter.

Das Deutsche Patent- und Markenamt hat in der Prioritätsanmeldung zu vorliegender Anmeldung folgenden Stand der Technik recherchiert: DE 10062025 C1, DE 2903819 A1, DE 10213792 A1, DE 102017105165 A1, US 2014/0246855 A1, US 2015/0130187 A1, EP 2933477 B1.

Zusätzlich beschreibt das Dokument US 2015 / 292 483 A1 ein System und Verfahren zur dynamischen Steuerung einer Windkraftanlage. Das Verfahren umfasst das Betreiben der Windturbine auf der Grundlage eines Schubsollwerts und einem Geschwindigkeitssollwert. Ein nächster Schritt umfasst die Bestimmung einer gewünschten Änderung der Ist-Drehzahl der Windturbine als Reaktion auf Steuerbetätigungen ausgehend von einem momentanen Betriebspunkt. Das Verfahren umfasst auch die Bestimmung einer gewünschten Änderung des Schubs der Windturbine als Reaktion auf Steuerbetätigungen ausgehend von dem momentanen Betriebspunkt. Als nächstes bestimmt das Verfahren mindestens einen Parametersollwert, der die gewünschte Änderung der Drehzahl und die gewünschte Änderung des Schubs erreicht und steuert die Windenergieanlage basierend auf dem Parametersollwert so, dass der tatsächliche Schub und die tatsächliche Geschwindigkeit der Windturbine innerhalb einer bestimmten Toleranz des Schubsollwerts und des Drehzahlsollwerts gehalten werden, um die Lasten, die auf die Windturbine wirken, zu regulieren und gleichzeitig eine nahezu optimale Leistungsabgabe zu erzielen.

Vor diesem Stand der Technik war es eine Aufgabe der vorliegenden Erfindung eine Reglerstruktur der Drehzahlregelung bereitzustellen, die eine Reduktion der Lasten der Windenergieanlage ermöglicht.

Gemäß einem ersten Aspekt wird die Aufgabe durch eine Reglerstruktur für eine Windenergieanlage gemäß Anspruch 1 gelöst.

Die Ausbildung der Drehzahlregelung als Kaskadenregelung ermöglicht, dass die langsame, äußere Drehzahlregelung im Ergebnis eine schnellere Regelung durch das Vorsehen des inneren Regelkreises, der eine schnell einregelbare Führungsgröße aufweist, ermöglicht. Damit wird die Grundlage geschaffen, auf die Windenergieanlage wirkende Lasten wirksam zu reduzieren. Anders ausgedrückt, die träge Führungsgröße des äußeren Regelkreises wird beibehalten, die Geschwindigkeit des Reglers aber durch eine schnelle verändernde Führungsgröße des inneren Regekreises kompensiert.

In einer Ausführungsform ist eine Regelgröße des äußeren Regelkreises als Führungsgröße des inneren Regelkreises vorgesehen. Die Stellgröße des äußeren Regelkreises ist demnach eine Drehzahländerung, eine Drehzahlbeschleunigung, eine Funktion der Drehzahländerung und/oder eine Funktion der Drehzahlbeschleunigung.

In einer Ausführungsform ist der äußere Regelkreis dazu ausgebildet, einen Sollwert des inneren Regelkreises, insbesondere der Drehzahländerung, der Drehzahlbeschleunigung, der Funktion der Drehzahländerung und/oder der Funktion der Drehzahlbeschleunigung, zu begrenzen. Damit ist vorteilhafter Weise eine Begrenzung einer maximalen auf den Rotor wirkenden Beschleunigung sowie damit verbundener Lasten möglich.

Das Eingangssignal des inneren Regelkreises umfasst eine Rotorbeschleunigungsleistung oder ein Rotorbeschleunigungsmoment, wobei die Rotorbeschleunigungsleistung oder das Rotorbeschleunigungsmoment den Teil einer von dem Rotor der Windenergieanlage aufgenommenen Leistung bzw. eines Drehmoments beschreibt, der in eine Beschleunigung des Rotors umgewandelt wird.

Hier und im nachfolgenden werden die Begriffe "Leistung" und "Moment" austauschbar verwendet, da sie durch einfachste Umrechnungen unter Verwendung der Drehzahl ineinander überführbar sind. Demnach sind Beschreibungen und Vorteile, die beispielhaft mit Hinblick auf eine Leistung erläutert sind, ebenso für das zugehörige Moment gültig und anders herum.

In einer Ausführungsform umfasst das Eingangssignal des inneren Regelkreises eine von dem Rotor aufgenommene aerodynamische Leistung, wobei die von dem Rotor aufgenommene aerodynamische Leistung eine Summe aus einer Rotorbeschleunigungsleistung und wenigstens einer von einer weiteren Komponente der Windenergieanlage aufgenommenen Leistung, insbesondere eine Generatorleistung eines Generators der Windenergieanlage, umfasst, wobei die Rotorbeschleunigungsleistung den Teil einer von dem Rotor der Windenergieanlage aufgenommenen Leistung beschreibt, der in eine Beschleunigung des Rotors umgewandelt wird.

In einer Ausführungsform bestimmt der äußere Regelkreis eine Abweichung einer Ist-Drehzahl des Rotors von einer Soll-Drehzahl des Rotors als Regelabweichung.

Damit wirkt der äußere Regelkreis entsprechend einer konventionellen Drehzahlregelung der Windenergieanlage, wobei durch die erfindungsgemäße Ausgestaltung als kaskadierende Regelung ein deutlich schnelleres Einregeln der gewünschten Größen ermöglicht wird.

In einer Ausführungsform erzeugt der äußere Regelkreis einen Sollwert einer Leistung oder eines Momentes als Stellgröße. Vorzugsweise handelt es sich bei dieser Leistung um die Beschleunigungsleistung des Rotors respektive die aufgenommene aerodynamische Leistung. Analog ist die Betrachtung, wie erwähnt, statt mit Leistungen mit zugehörigen Momenten möglich.

Der äußere Regelkreis erzeugt vorzugsweise als Sollwert immer die physikalische Größe, die als Eingangssignal für den inneren Regelkreis dient. Dieses physikalische Eingangssignal umfasst allgemein eine Drehzahländerung, eine Drehzahlbeschleunigung, eine Funktion der Drehzahländerung, eine Funktion der Drehzahlbeschleunigung, eine Rotorbeschleunigungsleistung, ein Rotorbeschleunigungsmoment und/oder eine aerodynamische Leistung.

In einer Ausführungsform ist der Sollwert der Leistung nach oben und unten begrenzt. Damit wird eine übermäßige Regelung durch den inneren Regelkreis, die beispielsweise wiederum zu hohen Lasten führen kann, vermieden.

In einer Ausführungsform ist der Sollwert der Leistung nach oben und unten unsymmetrisch begrenzt. Damit kann beispielsweise eine Beschleunigungsleistung auf einen anderen Wert als die Bremsleistung beschränkt sein, was wiederum eine Reduzierung der Lasten, die maximal auftreten können, zur Folge hat.

In einer Ausführungsform umfasst die Leistung eine Rotorbeschleunigungsleistung, wobei die Rotorbeschleunigungsleistung auf eine Nennleistung der Windenergieanlage, insbesondere auf höchstens 20% der Nennleistung der Windenergieanlage, begrenzt ist. Durch die Begrenzung der Rotorbeschleunigungsleistung wird eine übermäßige durch die Beschleunigung wirkende Last vermieden.

In einer Ausführungsform umfasst die Leistung eine aerodynamische Rotorleistung, wobei die aerodynamische Rotorleistung auf das doppelte einer Nennleistung der Windenergieanlage, insbesondere auf höchstens 120% der Nennleistung der Windenergieanlage, begrenzt ist. Die aerodynamische Rotorleistung umfasst insbesondere eine Summe der Generatorleistung und der Rotorbeschleunigungsleistung.

In einer Ausführungsform erzeugt der innere Regelkreis als Stellgröße einen Pitchwinkel oder eine Änderungsrate eines Pitchwinkels wenigstens eines der Rotorblätter des Rotors. Die Pitchwinkel bzw. -änderungsraten können individuell je Rotorblatt oder auch kollektiv für sämtliche Rotorblätter gemeinsam als Stellgröße bereitgestellt werden.

In einer Ausführungsform wird der Sollwert der Änderungsrate des Pitchwinkels begrenzt, insbesondere auf einen Wert zwischen -18°/s und 18°/s und besonders bevorzugt auf einen Wert zwischen -5°/s und +5°/s.

In einer Ausführungsform weisen der äußere Regelkreis und/oder der innere Regelkreis einen P-Regler auf.

Insbesondere dann, wenn als Sollwert ein Pitchwinkel ausgegeben wird, weist der innere Regelkreis alternativ oder zusätzlich einen I-Regler auf. Insbesondere kann der Regler auch als PI-Regler ausgebildet sein, vorteilhaft besonders dann, wenn der Ausgang ein Blattwinkel anstelle einer Pitchrate ist.

In einer Ausführungsform weist die Reglerstruktur ferner eine Berechnungskomponente auf, die dazu eingerichtet ist, aus einerÄnderung einer gemessenen Ist-Drehzahl der Windenergieanlage unter Verwendung der Rotorträgheit eine Rotorbeschleunigungsleistung zu bestimmen.

In einer Ausführungsform weist die Reglerstruktur ferner eine Vorsteuerung zum Vorsteuern eines Pitchwinkels wenigstens eines Rotorblattes auf, die dazu eingerichtet ist, parallel zu dem inneren Regelkreis einen Pitchwinkel und/oder eine Änderungsrate des Pitchwinkels vorzugeben.

Die aerodynamische Soll-Leistung bzw. die Soll-Rotorbeschleunigung ermöglicht daraus die Bestimmung eines Soll-Blattwinkels bzw. Soll-Pitchwinkels, beispielsweise um vor starken, sich ankündigenden Böen vorsteuern zu können, der sich zusammen mit dem Ist-Blattwinkel bzw. Ist-Pitchwinkel zu einer Vorsteuerpitchrate verrechnet.

Vorzugsweise laufen beide Pitchraten, das heißt die Änderungsrate des Pitchwinkels aufgrund des inneren Regelkreises sowie die Änderungsrate des Pitchwinkels aufgrund der Vorsteuerung, parallel, so dass diese überlagert werden. Eine Sache der Auslegung der Windenergieanlage ist es dann zu bestimmen, welche der beiden vorgegebenen Raten in welcher Weise durch die Anlage umgesetzt wird. Durch die in diesem Aspekt vorgesehene Vorsteuerung ist es möglich, Extremlasten, wie sie insbesondere bei Böen auftreten, zumindest teilweise abzufangen.

Gemäß einem weiteren Aspekt wird die Aufgabe erfindungsgemäß durch ein Verfahren zum Betreiben einer Windenergieanlage gemäß Anspruch 12 gelöst.

Das erfindungsgemäße Verfahren ermöglicht die gleichen Vorteile, wie sie für die erfindungsgemäße Reglerstruktur beschrieben sind, zu erreichen. Ebenso ist das Verfahren analog und mit damit verbundenen Vorteilen mit den erfindungsgemäß als bevorzugt beschriebenen Ausgestaltungen kombinierbar.

Gemäß einem weiteren Aspekt wird die Aufgabe erfindungsgemäß durch eine Windenergieanlage mit einer erfindungsgemäßen Reglerstruktur gelöst.

Gemäß einem weiteren Aspekt wird die Aufgabe erfindungsgemäß durch einen Windpark mit mehreren erfindungsgemäßen Windenergieanlagen gelöst.

Weitere Vorteile und beispielhafte Ausführungen werden nachfolgend mit Verweis auf die beigefügten Figuren beschrieben. Hierbei zeigen:
- Fig. 1: schematisch und exemplarisch eine Windenergieanlage,
- Fig. 2: schematisch und exemplarisch eine Reglerstruktur für Drehzahlregler von Windenergieanlagen und
- Fig. 3: schematisch und exemplarisch eine erfindungsgemäße Reglerstruktur.

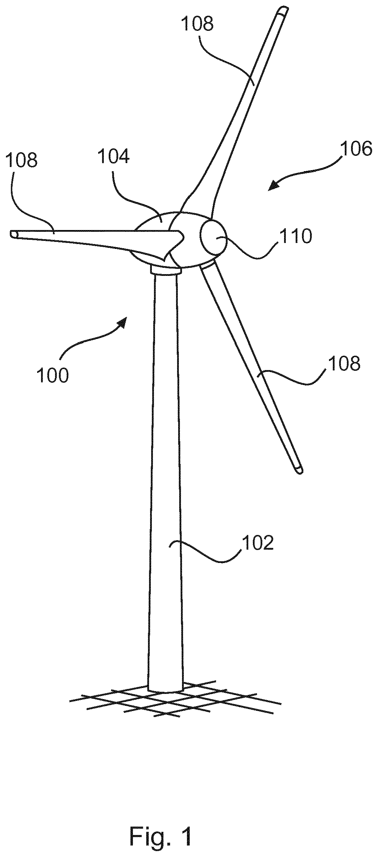

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Fig. 3 zeigt schematisch und exemplarisch eine erfindungsgemäße Reglerstruktur 300 für eine Windenergieanlage 100, wie sich beispielsweise in Fig. 1 gezeigt ist. Die Reglerstruktur 300 ist als Kaskadenregelung ausgebildet und weist einen äußeren Regelkreis 310 und einen inneren Regelkreis 350 auf. Die Reglerstruktur 300 regelt eine Drehzahl in der Windenergieanlage auf einen Sollwert *N_{Soll}*. Hierzu vergleicht der äußere Regelkreis 310 die Ist-Drehzahl *N_{Ist}* mit der einzuregelnden Solldrehzahl *N_{Soll}* und erzeugt einen Sollwert 340 der Rotorbeschleunigungsleistung *P_{Beschleu_Soll}* mittels eines durch einen Begrenzer 330 begrenzten Signals eines P-Reglers 320.

Der innere Regelkreis 350 regelt nun auf die Rotorbeschleunigungsleistung *P_{Beschleu}* und versucht demnach, die Rotorblätter der Windenergieanlage 100 derart zu stellen, dass der Rotor 106 möglichst wenig beschleunigt. Hierzu wird mittels einer Berechnungseinheit 380 beispielsweise anhand der der zeitlichen Änderung der Rotordrehzahl *dN_{Ist}*/*dt* durch eine Berechnungseinheit 380 eine Ist-Beschleunigungsleistung *P_{Beschleu}* bestimmt. Der Unterscheid zwischen dem Sollwert 340 der Beschleunigungsleistung *P_{Beschleu_Soll}* und dem ermittelten Ist-Wert *P_{Beschleu}* wird mit einem P-Regler 360 in eine einzustellende Pitchrate bzw. einen einzustellenden Blattwinkel der Rotorblätter 108 umgerechnet. Durch einen Begrenzer 370 wird die einzustellende Pitchrate bzw. der einzustellende Pitchwinkel begrenzt, der dann als Sollwert 390 an die Steuerung der Windenergieanlage 100 übergeben wird.

Die Berechnungseinheit 380 greift in diesem Beispiel auf bekannte physikalische Zusammenhänge zwischen dem für den Rotor bekannten Trägheitsmoment *J* , einem Drehmoment*M* und Drehzahl bzw. daraus abgeleitet Winkelgeschwindigkeit *ω* zurück, um aus der Änderung der Drehzahl die Ist-Beschleunigungsleistung *P_{Beschleu}* zu berechnen.

Anstelle der Rotorbeschleunigungsleistung, wie sie in dem Ausführungsbeispiel beschrieben ist, ist auch möglich, die gesamte vom Rotor aufgenommene aerodynamische Leistung, das heißt unter zusätzlicher Betrachtung zu der vom Generator aufgenommenen Leistung, zu verwenden. Ein Vorteil der Rotorbeschleunigungsleistung ist in vielen Fällen, dass die Größe häufig für in Steuerung von Windenergieanlagen 100 eingesetzte Windschätzer üblicherweise bereits zur Verfügung steht, das heißt eine weitergehende Adaption der Steuerung der Windenergieanlage 100 nicht erforderlich ist. Es genügt demnach lediglich den bekannten Drehzahlregler durch eine erfindungsgemäße Reglerstruktur 300 zu ersetzen. Windschätzer sind beispielsweise aus der deutschen Patentveröffentlichung DE 10 2017 105 165 A1 bekannt.

Alternativ zu Leistungen lässt sich die beispielhaft dargelegte Reglerstruktur 300 auch mit Momenten bzw. nach der Zeit abgeleiteten Drehzahlen implementieren. Diese Lösungen sind identisch bis auf den Aspekt, dass die aktuelle Drehzahl in die Beschleunigungsleistung mit eingeht. Es ist allerdings hinreichend bekannt, wie Leistungen in Momente und umgekehrt umzurechnen sind.

Der innere Regelkreis 350 würde für sich alleine genommen mit der Zeit zu starken Drehzahlfehlern führen, so dass der äußere Regelkreis 310, der deutlich langsamer und träger reagiert, einen Sollwert für die Beschleunigungsleistung, der von 0 kW abweichen kann, generiert. Herrscht beispielsweise eine Überdrehzahlsituation vor, das heißt, dass die Ist-Drehzahl *N_{Ist}* größer als die Solldrehzahl *N_{Soll}* ist, wäre der Sollwert 340 beispielsweise -200 kW. Der innere Regelkreis 350 würde in diesem Fall eine ungefähre Rotorbeschleunigungsleistung *P_{Beschleu}* von -200 kW einregeln, so dass der Rotor 106 im Ergebnis Drehzahl abbaut.

Die Begrenzung der Ausgabe des Drehzahlreglers durch die Begrenzer 330 bzw. 370 ermöglicht, dass die maximale Beschleunigungsleistung beschränkt ist, was ebenfalls lastreduzierend wirkt.

Besonders vorteilhaft lässt sich die in Fig. 3 schematisch gezeigte Reglerstruktur 300 um eine parallel zu dem inneren Regelkreis 350 angeordnete Vorsteuerung ergänzen. Die Vorsteuerung kann beispielsweise auf sich ankündigende Böen vorsteuern und demnach in Ergänzung zu der Regelung aktiv in die Pitchwinkelansteuerung eingreifen. Damit können besonders wirksam auftretende Extremlasten, wie sie die Folge von starken Böen sind, vermieden werden.

Zusammengefasst bedeutet die erfindungsgemäße Reglerstruktur demnach eine Reglerstruktur 300 zum Regeln der Drehzahl auf einen Drehzahlsollwert *N_{Soll}*. Der inneren Regelkreis 350 erhält die vom Rotor 106 aufgenommene aerodynamische Leistung bzw. die Beschleunigungsleistung oder vereinfacht auch lediglich die Rotorbeschleunigung als Regelgröße, wobei die Pitchrate oder alternativ auch ein Sollrotorblattwinkel als Stellgröße dient. Der äußere Regelkreis 310 regelt als Regelgröße die Rotordrehzahl *N*, wobei ein Sollwert der aerodynamischen Leistung, der Beschleunigungsleistung oder auch der Soll-rotorbeschleunigung als Stellgröße für den inneren Regelkreis 350 generiert werden.

## Patentansprüche

1. Reglerstruktur (300) für eine Windenergieanlage (100) mit einem aerodynamischen Rotor (106) mit wenigstens einem Rotorblatt (108), wobei die Reglerstruktur (300) dazu ausgebildet ist, eine Drehzahl (n) des Rotors (106) der Windenergieanlage (100) zu regeln, wobei
die Reglerstruktur (300) als Kaskadenregelung ausgebildet ist und einen äußeren Regelkreis (310) und einen inneren Regelkreis (350) aufweist, wobei
der innere Regelkreis (350) ein Eingangssignal (340) erhält, das eine Drehzahländerung, eine Drehzahlbeschleunigung, eine Funktion der Drehzahländerung und/oder eine Funktion der Drehzahlbeschleunigung umfasst, **dadurch gekennzeichnet, dass**
das Eingangssignal des inneren Regelkreises (350) eine Rotorbeschleunigungsleistung oder ein Rotorbeschleunigungsmoment umfasst, wobei
die Rotorbeschleunigungsleistung oder das Rotorbeschleunigungsmoment den Teil einer von dem Rotor (106) der Windenergieanlage (100) aufgenommenen Leistung bzw. Drehmoment beschreibt, der in eine Beschleunigung des Rotors (106) umgewandelt wird.

2. Reglerstruktur (300) nach Anspruch 1, wobei
eine Regelgröße des äußeren Regelkreises (310) als Führungsgröße des inneren Regelkreises (350) vorgesehen ist, wobei
der äußere Regelkreis (310) insbesondere dazu ausgebildet ist, einen Sollwert des inneren Regelkreises, insbesondere der Drehzahländerung, der Drehzahlbeschleunigung, der Funktion der Drehzahländerung und/oder der Funktion der Drehzahlbeschleunigung, zu begrenzen.

3. Reglerstruktur (300) nach einem der vorstehenden Ansprüche, wobei
das Eingangssignal des inneren Regelkreises (350) eine von dem Rotor (106) aufgenommene aerodynamische Leistung umfasst, wobei
die von dem Rotor (106) aufgenommene aerodynamische Leistung eine Summe aus der Rotorbeschleunigungsleistung und wenigstens einer von einer weiteren Komponente der Windenergieanlage (100) aufgenommenen Leistung, insbesondere eine Generatorleistung eines Generators der Windenergieanlage (100), umfasst.

4. Reglerstruktur (300) nach einem der vorstehenden Ansprüche, wobei
der äußere Regelkreis (310) eine Abweichung einer Ist-Drehzahl des Rotors (106) von einer Soll-Drehzahl des Rotors (106) als Regelabweichung bestimmt.

5. Reglerstruktur (300) nach einem der vorstehenden Ansprüche, wobei
der äußere Regelkreis (310) einen Sollwert (340) einer Leistung oder eines Momentes als Stellgröße erzeugt, wobei der Sollwert (340) der Leistung vorzugsweise nach oben und unten und insbesondere nach oben und unten unsymmetrisch begrenzt ist.

6. Reglerstruktur (300) nach Anspruch 5, wobei die Leistung eine Rotorbeschleunigungsleistung umfasst,
wobei die Rotorbeschleunigungsleistung auf eine Nennleistung der Windenergieanlage (100), insbesondere auf höchstens 20% der Nennleistung der Windenergieanlage (100), begrenzt ist.

7. Reglerstruktur (300) nach einem der Ansprüche 5 oder 6, wobei die Leistung eine aerodynamische Rotorleistung umfasst,
wobei die aerodynamische Rotorleistung auf das doppelte einer Nennleistung der Windenergieanlage (100), insbesondere auf höchstens 120% der Nennleistung der Windenergieanlage (100), begrenzt ist.

8. Reglerstruktur (300) nach einem der vorstehenden Ansprüche, wobei
der innere Regelkreis (350) als Stellgröße einen Pitchwinkel oder eine Änderungsrate eines Pitchwinkels wenigstens eines der Rotorblätter (108) des Rotors (106) erzeugt, wobei der Sollwert (340) der Änderungsrate des Pitchwinkels vorzugsweise begrenzt wird, insbesondere auf einen Wert zwischen -18°/s und 18°/s und besonders bevorzugt auf einen Wert zwischen -5°/s und +5°/s begrenzt wird.

9. Reglerstruktur (300) nach einem der vorstehenden Ansprüche, wobei
der äußere Regelkreis (310) und/oder der innere Regelkreis (350) einen P-Regler (320) und/oder einen PI-Regler aufweisen.

10. Reglerstruktur (300) nach einem der vorstehenden Ansprüche, wobei
die Reglerstruktur (300) ferner eine Berechnungskomponente aufweist, die dazu eingerichtet ist, aus einer Änderung einer gemessenen Ist-Drehzahl der Windenergieanlage (100) unter Verwendung der Rotorträgheit eine Rotorbeschleunigungsleistung zu bestimmen.

11. Reglerstruktur (300) nach einem der vorstehenden Ansprüche, wobei
die Reglerstruktur (300) ferner eine Vorsteuerung zum Vorsteuern eines Pitchwinkels wenigstens eines Rotorblattes (108) aufweist, die dazu eingerichtet ist, parallel zu dem inneren Regelkreis (350) einen Pitchwinkel und/oder eine Änderungsrate des Pitchwinkels vorzugeben.

12. Verfahren zum Betreiben einer Windenergieanlage (100) mit einem aerodynamischen Rotor (106) mit wenigstens einem Rotorblatt (108), wobei das Verfahren dazu ausgebildet ist, eine Drehzahl des Rotors (106) der Windenergieanlage (100) zu regeln, wobei
das Verfahren als Kaskadenregelung ausgebildet ist und einen äußeren Regelkreis (310) und einen inneren Regelkreis (350) aufweist, wobei das Verfahren den folgenden Schritt aufweist:
Erlangen, durch den inneren Regelkreis (350), eines Eingangssignals, das eine Drehzahländerung, eine Drehzahlbeschleunigung, eine Funktion der Drehzahländerung und/oder eine Funktion der Drehzahlbeschleunigung umfasst, **dadurch gekennzeichnet, dass** das Eingangssignal des inneren Regelkreises (350) eine Rotorbeschleunigungsleistung oder ein Rotorbeschleunigungsmoment umfasst, wobei
die Rotorbeschleunigungsleistung oder das Rotorbeschleunigungsmoment den Teil einer von dem Rotor (106) der Windenergieanlage (100) aufgenommenen Leistung bzw. Drehmoment beschreibt, der in eine Beschleunigung des Rotors (106) umgewandelt wird.

13. Windenergieanlage (100) mit einer Reglerstruktur (300) nach einem der Ansprüche 1 bis 11.

14. Windpark mit mehreren Windenergieanlagen (100) nach Anspruch 13.

## Claims

1. A controller structure (300) for a wind turbine (100) having an aerodynamic rotor (106) with at least one rotor blade (108), wherein the controller structure (300) is designed to control a rotation speed (n) of the rotor (106) of the wind turbine (100), wherein
the controller structure (300) is designed as a cascade control arrangement and has an outer control loop (310) and an inner control loop (350), wherein
the inner control loop (350) receives an input signal (340) which comprises a change in the rotation speed, an acceleration of the rotation speed, a function of the change in the rotation speed and/or a function of the acceleration of the rotation speed, **characterized in that**
the input signal of the inner control loop (350) comprises a rotor acceleration power or a rotor acceleration torque, wherein
the rotor acceleration power or the rotor acceleration torque describes the portion of a power or torque received by the rotor (106) of the wind turbine (100) that is converted into an acceleration of the rotor (106).

2. The controller structure (300) as claimed in claim 1, wherein
a controlled variable of the outer control loop (310) is provided as reference variable of the inner control loop (350), wherein
the outer control loop (310) is in particular designed to limit a target value of the inner control loop, in particular the change in the rotation speed, the acceleration of the rotation speed, the function of the change in the rotation speed and/or the function of the acceleration of the rotation speed.

3. The controller structure (300) as claimed in one of the preceding claims, wherein
the input signal of the inner control loop (350) comprises an aerodynamic power received by the rotor (106), wherein
the aerodynamic power received by the rotor (106) comprises a sum of the rotor acceleration power and at least one power received by a further component of the wind turbine (100), in particular a generator power of a generator of the wind turbine (100).

4. The controller structure (300) as claimed in one of the preceding claims, wherein
the outer control loop (310) determines a deviation of an actual rotation speed of the rotor (106) from a target rotation speed of the rotor (106) as a system deviation.

5. The controller structure (300) as claimed in one of the preceding claims, wherein
the outer control loop (310) generates a target value (340) of a power or of a torque as manipulated variable, wherein the target value (340) of the power is preferentially limited upward and downward, wherein in particular the target value (340) of the power is asymmetrically limited upward and downward.

6. The controller structure (300) as claimed in claim 5, wherein the power comprises a rotor acceleration power,
wherein the rotor acceleration power is limited to a rated power of the wind turbine (100), in particular to at most 20% of the rated power of the wind turbine (100).

7. The controller structure (300) as claimed in one of claims 5 or 6, wherein the power comprises an aerodynamic rotor power,
wherein the aerodynamic rotor power is limited to twice a rated power of the wind turbine (100), in particular to at most 120% of the rated power of the wind turbine (100).

8. The controller structure (300) as claimed in one of the preceding claims, wherein
the inner control loop (350) generates, as manipulated variable, a pitch angle or a rate of change in a pitch angle of at least one of the rotor blades (108) of the rotor (106), wherein the target value (340) for the rate of change in the pitch angle is preferentially limited, in particular to a value of between -18°/s and 18°/s and particularly preferably to a value of between -5°/s and +5°/s.

9. The controller structure (300) as claimed in one of the preceding claims, wherein
the outer control loop (310) and/or the inner control loop (350) have/has a P controller (320) and/or a PI controller.

10. The controller structure (300) as claimed in one of the preceding claims, wherein
the controller structure (300) further has a calculation component which is designed to determine a rotor acceleration power from a change in a measured actual rotation speed of the wind turbine (100) using the rotor inertia.

11. The controller structure (300) as claimed in one of the preceding claims, wherein
the controller structure (300) further has a pilot control arrangement for pilot control of a pitch angle of at least one rotor blade (108), which pilot control arrangement is designed to prespecify, parallel to the inner control loop (350), a pitch angle and/or a rate of change in the pitch angle.

12. A method for operating a wind turbine (100) having an aerodynamic rotor (106) with at least one rotor blade (108), wherein the method is designed to control a rotation speed of the rotor (106) of the wind turbine (100), wherein
the method is designed as a cascade control arrangement and has an outer control loop (310) and an inner control loop (350), wherein the method comprises the following step:
acquiring, by the inner control loop (350), an input signal which comprises a change in the rotation speed, an acceleration of the rotation speed, a function of the change in the rotation speed and/or a function of the acceleration of the rotation speed, **characterized in that**
the input signal of the inner control loop (350) comprises a rotor acceleration power or a rotor acceleration torque, wherein
the rotor acceleration power or the rotor acceleration torque describes the portion of a power or torque received by the rotor (106) of the wind turbine (100) that is converted into an acceleration of the rotor (106).

13. A wind turbine (100) having a controller structure (300) as claimed in one of claims 1 to 11.

14. A wind farm having a plurality of wind turbines (100) as claimed in claim 13.

## Revendications

1. Structure de régulation (300) pour une éolienne (100) avec un rotor aérodynamique (106) avec au moins une pale de rotor (108), dans laquelle la structure de régulation (300) est réalisée pour réguler une vitesse de rotation (n) du rotor (106) de l'éolienne (100), dans laquelle
la structure de régulation (300) est réalisée en tant que régulation en cascade et présente un circuit de régulation externe (310) et un circuit de régulation interne (350), dans laquelle
le circuit de régulation interne (350) reçoit un signal d'entrée (340), qui comprend une modification de vitesse de rotation, une accélération de vitesse de rotation, une fonction de la modification de vitesse de rotation et/ou une fonction de l'accélération de vitesse de rotation, **caractérisée en ce que**
le signal d'entrée du circuit de régulation interne (350) comprend une puissance d'accélération de rotor ou un couple d'accélération de rotor, dans laquelle
la puissance d'accélération de rotor ou le couple d'accélération de rotor décrit la partie d'une puissance ou d'un couple de rotation absorbée/absorbé par le rotor (106) de l'éolienne (100), qui est convertie en une accélération du rotor (106).

2. Structure de régulation (300) selon la revendication 1, dans laquelle
une grandeur de régulation du circuit de régulation externe (310) est prévue en tant que grandeur de guidage du circuit de régulation interne (350), dans laquelle
le circuit de régulation externe (310) est réalisé en particulier pour délimiter une valeur théorique du circuit de régulation interne, en particulier de la modification de vitesse de rotation, de l'accélération de vitesse de rotation, de la fonction de la modification de vitesse de rotation et/ou de la fonction de l'accélération de vitesse de rotation.

3. Structure de régulation (300) selon l'une quelconque des revendications précédentes, dans laquelle
le signal d'entrée du circuit de régulation interne (350) comprend une puissance aérodynamique absorbée par le rotor (106), dans laquelle
la puissance aérodynamique absorbée par le rotor (106) comprend une somme de la puissance d'accélération de rotor et d'au moins une puissance absorbée par un autre composant de l'éolienne (100), en particulier une puissance de générateur d'un générateur de l'éolienne (100).

4. Structure de régulation (300) selon l'une quelconque des revendications précédentes, dans laquelle
le circuit de régulation externe (310) définit un écart d'une vitesse de rotation réelle du rotor (106) par rapport à une vitesse de rotation théorique du rotor (106) en tant qu'écart de régulation.

5. Structure de régulation (300) selon l'une quelconque des revendications précédentes, dans laquelle
le circuit de régulation externe (310) génère une valeur théorique (340) d'une puissance ou d'un couple en tant que grandeur de réglage, dans laquelle la valeur théorique (340) de la puissance est limitée de préférence vers le haut et le bas et en particulier de manière asymétrique vers le haut et le bas.

6. Structure de régulation (300) selon la revendication 5, dans laquelle la puissance comprend une puissance d'accélération de rotor,
dans laquelle la puissance d'accélération de rotor se limite à une puissance nominale de l'éolienne (100), en particulier à 20 % au maximum de la puissance nominale de l'éolienne (100).

7. Structure de régulation (300) selon l'une quelconque des revendications 5 ou 6, dans laquelle la puissance comprend une puissance de rotor aérodynamique,
dans laquelle la puissance de rotor aérodynamique se limite au double d'une puissance nominale de l'éolienne (100), en particulier à 120 % au maximum de la puissance nominale de l'éolienne (100).

8. Structure de régulation (300) selon l'une quelconque des revendications précédentes, dans laquelle
le circuit de régulation interne (350) génère, en tant que grandeur de réglage, un angle de pas ou un taux de modification d'un angle de pas d'au moins une des pales de rotor (108) du rotor (106), dans laquelle la valeur théorique (340) du taux de modification de l'angle de pas est de préférence limitée, en particulier à une valeur entre -18 °/s et 18°/s et de manière particulièrement préférée à une valeur entre -5°/s et +5°/s.

9. Structure de régulation (300) selon l'une quelconque des revendications précédentes, dans laquelle
le circuit de régulation externe (310) et/ou le circuit de régulation interne (350) présentent un régulateur P (320) et/ou un régulateur PI.

10. Structure de régulation (300) selon l'une quelconque des revendications précédentes, dans laquelle
la structure de régulation (300) présente en outre une composante de calcul, qui est mise au point pour définir une puissance d'accélération de rotor à partir d'une modification d'une vitesse de rotation réelle mesurée de l'éolienne (100) en utilisant l'inertie de rotor.

11. Structure de régulation (300) selon l'une quelconque des revendications précédentes, dans laquelle
la structure de régulation (300) présente en outre une précommande destinée à précommander un angle de pas d'au moins une pale de rotor (108), qui est mise au point pour prédéfinir, en parallèle du circuit de régulation interne (350), un angle de pas et/ou un taux de modification de l'angle de pas.

12. Procédé de fonctionnement d'une éolienne (100) avec un rotor aérodynamique (106) avec au moins une pale de rotor (108), dans lequel le procédé est réalisé pour réguler une vitesse de rotation du rotor (106) de l'éolienne (100), dans lequel
le procédé est réalisé en tant que régulation en cascade et présente un circuit de régulation externe (310) et un circuit de régulation interne (350), dans lequel le procédé présente l'étape suivante :
l'obtention, par le circuit de régulation interne (350), d'un signal d'entrée, qui comprend une modification de vitesse de rotation, une accélération de vitesse de rotation, une fonction de la modification de vitesse de rotation et/ou une fonction de l'accélération de vitesse de rotation, **caractérisé en ce que** le signal d'entrée du circuit de régulation interne (350) comprend une puissance d'accélération de rotor ou un couple d'accélération de rotor, dans lequel
la puissance d'accélération de rotor ou le couple d'accélération de rotor décrit la partie d'une puissance ou d'un couple de rotation absorbée/absorbé par le rotor (106) de l'éolienne (100), qui est convertie en une accélération du rotor (106).

13. Eolienne (100) avec une structure de régulation (300) selon l'une quelconque de revendications 1 à 11.

14. Parc éolien avec plusieurs éoliennes (100) selon la revendication 13.
